# FASCICULE DE BREVET EUROPEEN

(11) **EP 3 634 776 B1**
(45) Date de publication et mention de la délivrance du brevet: **25.08.2021**
(21) Numéro de dépôt: 18737664.5
(22) Date de dépôt: 06.06.2018
(51) Int. Cl.: B60C 1/00, C08L 23/08

(54) **COMPOSITION DE CAOUTCHOUC**
KAUTSCHUKZUSAMMENSETZUNG
RUBBER COMPOSITION

(30) Priorité: 08.06.2017 FR 1755109
(43) Date de publication de la demande: 15.04.2020
(73) Titulaire: Compagnie Générale des Etablissements Michelin, 63000 Clermont-Ferrand (FR)
(72) Inventeur: THUILLIEZ, Julien, 63040 Clermont-Ferrand Cedex 9 (FR); MORESO, Emma, 63040 Clermont-Ferrand Cedex 9 (FR); LAFAQUIERE, Vincent, 63040 Clermont-Ferrand Cedex 9 (FR)
(74) Mandataire: Gandon-Pain, Sylvie
(86) Numéro de dépôt international: PCT/FR2018/051307
(87) Numéro de publication internationale: WO 2018/224776

(56) Documents cités:
- WO-A1-2017/060395
- US-A1- 2015 353 716
- US-A1- 2016 319 045

## Description

La présente invention concerne une composition de caoutchouc utilisable notamment pour la fabrication de pneumatique, qui comprend au moins une charge inorganique renforçante et un élastomère diénique fonctionnel et fortement saturé, car riche en unité éthylène.

Un pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée. Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de silices hautement dispersibles dites "HDS" (Highly Dispersible Silica), capables de rivaliser, du point de vue du pouvoir renforçant, avec les noirs de carbone conventionnels de grade pneumatique.

Les compositions de caoutchouc pour pneumatique comprennent généralement des élastomères riches en unité diénique tels que les polybutadiènes, les polyisoprènes et les copolymères de 1,3-butadiène ou d'isoprène et de styrène. Le remplacement de ces élastomères riches en unité diénique dans ces mêmes compositions par des élastomères diéniques riches en unité éthylène s'accompagne à la fois d'une diminution d'hystérèse de la composition de caoutchouc et d'une augmentation de sa rigidité, ce qui se traduit par une modification du compromis de performance entre la résistance au roulement et l'usure. On peut par exemple se référer au document WO 2014114607. Ces élastomères diéniques riches en unité éthylène ont aussi la propriété de conférer aux compositions de caoutchouc une performance améliorée de résistance à l'usure dans des conditions extrêmes, comme cela est décrit dans le document WO 2016012259.

Pour améliorer davantage la performance de résistance au roulement, il est connu d'utiliser des élastomères qui présentent une ou des fonctions interactives avec la charge renforçante. Des élastomères fonctionnels peuvent être préparés par polymérisation anionique, la fonctionnalisation ayant lieu pendant la réaction d'amorçage ou de terminaison. La modification des extrémités des chaînes polymères produites par polymérisation anionique repose sur le caractère vivant des chaînes polymères, le caractère vivant se traduisant par l'absence de réaction de transfert et de réaction de terminaison pendant la réaction de polymérisation. La polymérisation vivante se caractérise aussi par le fait qu'une seule chaîne polymère est produite par mole d'amorceur ou par métal. La modification en extrémité de chaîne d'un polymère par une fonction alcoxysilane ou silanol est beaucoup moins décrite pour les polymères synthétisés par polymérisation catalytique au moyen d'un système catalytique hétérogène de type Ziegler-Natta. A titre d'exemple, on peut citer le document WO 2001034658 qui décrit la fonctionnalisation d'un polybutadiène à fort taux de liaison 1,4-cis préparé par une catalyse de coordination à partir d'un système catalytique comprenant un carboxylate de néodyme.. Mais ces voies de synthèse ne conduisent pas à des élastomères diéniques riches en unité éthylène.

La polymérisation au moyen d'un système catalytique de coordination, comprenant un métallocène permet d'accéder à des copolymères diéniques riches en éthylène. Mais cette polymérisation procède d'une chimie différente de la polymérisation anionique et de la polymérisation par catalyse Ziegler Natta. Une première différence porte sur le système catalytique, par exemple décrit dans les documents EP 1 092 731 B1, WO 2004035639 et EP 1 954 706 B1 qui est typiquement composé d'un métallocène et d'un co-catalyseur, un organomagnésien. Une deuxième différence porte sur les réactions mises en jeu qui comprennent de nombreuses réactions de transfert entre le métal du métallocène et le magnésium du co-catalyseur et qui permettent aussi la production d'un grand nombre de chaînes copolymères par métal de métallocène. Une troisième différence porte sur les chaînes polymères produites qui comportent à la fois des unités insaturées telles que des unités diéniques, et des unités saturées éthyléniques. Une autre différence porte sur la structure chimique de l'extrémité de chaîne à modifier, structure qui résulte du mécanisme très spécifique de polymérisation. On peut se référer par exemple au document ACS Catalysis, 2016, Volume 6, Issue 2, pages 1028-1036. En raison de la spécificité des espèces et des réactions mises en jeu dans la synthèse de ces copolymères, il n'existe pas à ce jour de procédé permettant la modification de ces copolymères en extrémité de chaîne et par suite une diminution d'hystérèse de compositions de caoutchouc renforcées de silice et contenant ces copolymères.

Il a été proposé dans le document WO 2016012258 de modifier, après leur synthèse, des élastomères diéniques riches en unité éthylène en les fonctionnalisant avec des groupes associatifs par réaction de greffage d'un composé 1,3-dipolaire sur les unités diéniques des élastomères. Les élastomères modifiés confèrent à la composition de caoutchouc une hystérèse réduite. Néanmoins, la rigidité de la composition reste aussi élevée qu'avant la modification, ce qui peut les rendre inappropriés pour être utilisés dans un article semi-fini pour pneumatique.

Le but de la présente invention est de proposer une composition de caoutchouc faiblement hystérétique qui comprend un élastomère diénique riche en unité éthylène tout en diminuant sa rigidité. Ce but est atteint en ce que les inventeurs ont découvert qu'un tel compromis entre rigidité et hystérèse pouvait être obtenu par la modification de l'extrémité de chaîne de l'élastomère diénique riche en unité éthylène par une fonction silanol ou alcoxysilane.

Ainsi un premier objet de l'invention est une composition de caoutchouc qui comprend au moins une charge inorganique renforçante et un élastomère fortement saturé comprenant des unités 1,3-diène et des unités éthylène et portant une fonction silanol ou alcoxysilane en extrémité de chaîne, les unités éthylène représentant plus de 50% en mole de l'ensemble des unités monomères de l'élastomère.

Un autre objet de l'invention est un article semi-fini qui comprend une composition de caoutchouc conforme à l'invention.

L'invention a aussi pour objet un pneumatique qui comprend une composition de caoutchouc conforme à l'invention ou un article semi-fini conforme à l'invention.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par « l'ensemble des unités monomères de l'élastomère » ou « la totalité des unités monomères de l'élastomère » tous les motifs de répétition constitutifs de l'élastomère qui résultent de l'insertion des monomères dans la chaîne élastomère par polymérisation.

L'élastomère utile aux besoins de l'invention est un élastomère qui comprend des unités éthylène résultant de la polymérisation d'éthylène. De manière connue, l'expression « unité éthylène » fait référence au motif -(CH₂-CH₂)- résultant de l'insertion de l'éthylène dans la chaîne élastomère. L'élastomère riche en unité éthylène est qualifié d'élastomère fortement saturé, puisque les unités éthylène représentent plus de 50% en mole de l'ensemble des unités monomères de l'élastomère. De préférence, elles représentent plus de 60% en mole de l'ensemble des unités monomères de l'élastomère. De manière plus préférentielle, le taux d'unité éthylène dans l'élastomère est d'au moins 65% en mole de l'ensemble des unités monomères de l'élastomère.

L'élastomère utile aux besoins de l'invention comprend aussi des unités 1,3-diène résultant de la polymérisation d'un 1,3-diène. De manière connue, l'expression « unité 1,3-diène » fait référence aux unités résultant de l'insertion du 1,3-diène par une insertion 1,4, une insertion 2,1 ou une insertion 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène.

Selon un premier mode de réalisation de l'invention, l'élastomère contient des unités UD de formule (I) et peut contenir des unités UE de formule (II).

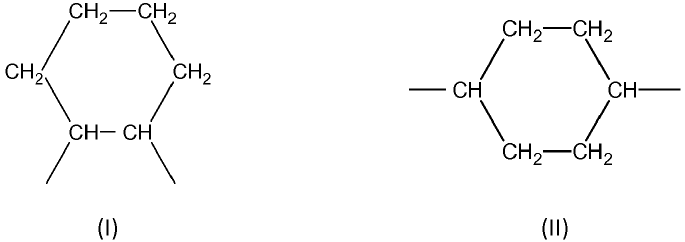

De préférence, l'élastomère contient les unités UA, UB, UC, UD et UE suivantes réparties de façon statistique selon les pourcentages molaires indiqués ci-après :

| | | |
|---|---|---|
| UA) | -CH₂-CH₂- | selon un pourcentage molaire de m% |
| UB) | -CH₂-CH=CH-CH₂- | selon un pourcentage molaire de n% |
| UC) | -CH₂-CH(CH=CH₂)- | selon un pourcentage molaire de o% |
| UD) | 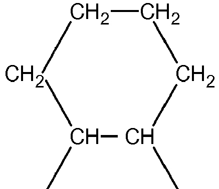 | selon un pourcentage molaire de p% |
| UE) | 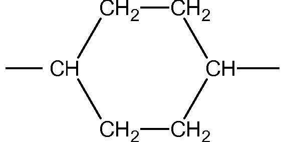 | selon un pourcentage molaire de q% |

▪ m, n, o, p et q étant des nombres allant de 0 à 100,
▪ m > 50
▪ n + o > 0
▪ p > 0
▪ q ≥ 0,
▪ les pourcentages molaires respectifs de m, n, o, p et q étant calculés sur la base de la somme de m+ n + o + p + q qui est égale à 100.

De manière plus préférentielle,
▪ 0 < o + p ≤ 25
▪ o + p + q ≥ 5
▪ n + o >0
▪ q ≥ 0,
▪ les pourcentages molaires respectifs de m, n, o, p et q étant calculés sur la base de la somme de m+ n + o + p + q qui est égale à 100.

De manière encore plus préférentielle, l'élastomère présente au moins l'un des critères suivants, et préférentiellement tous :
▪ m ≥ 65
▪ n + o + p + q ≥ 15, de préférence n + o + p + q ≥ 20
▪ 12 ≥ p + q ≥ 2
▪ 1 ≥ n / (o + p + q)
▪ lorsque q est non nul, 20 ≥ p / q ≥ 1.

Avantageusement q est égal à 0.

Selon un deuxième mode de réalisation de l'invention, l'élastomère contient des unités 1,4-trans qui représentent plus de 80% en mole des unités 1,3-diène de l'élastomère. Autrement dit, les unités 1,3-diène dans l'élastomère contiennent plus de 80% en mole d'unité 1,4-trans selon de mode de réalisation. De façon bien connue, les unités 1,4-trans sont des unités 1,4 qui ont la configuration trans.

Selon le deuxième mode de réalisation, l'élastomère peut comprendre des unités UD de formule (I), auquel cas les unités UD représentent de préférence moins de 1% en mole de l'ensemble des unités monomères de l'élastomère.

Selon une variante du deuxième mode de réalisation, l'élastomère comprend des unités d'une α-monooléfine réparties de façon statistique au sein de l'élastomère. Selon cette variante, l'élastomère est préférentiellement un terpolymère de 1,3-butadiène, d'éthylène et d'une α-monooléfine. Par alpha-oléfine (a-oléfine), on entend une oléfine terminale, c'est-à-dire qu'elle contient le groupe vinylique de formule -CH=CH₂. Par monooléfine, on entend un monomère qui contient une seule double liaison carbone carbone hormis celles du noyau benzénique du groupe aromatique. L'a-monooléfine peut être aliphatique ; à ce titre, on peut citer les α-monooléfines aliphatiques ayant de 3 à 18 atomes de carbone, telles que le propène, le 1-butène, le 1-hexène, le 1-octène, le 1-hexadécène ou leurs mélanges. L'a-monooléfine peut être aussi une α-monooléfine aromatique. Typiquement, l'a-monooléfine aromatique est de formule CH₂=CH-Ar, dans lequel le symbole Ar représente un groupe aromatique. Le groupe aromatique peut être un phényle, substitué ou non. A titre d'a-monooléfine aromatique conviennent le styrène, les styrènes substitués par un ou plusieurs groupes alkyles en para, méta ou ortho ou leurs mélanges.

L'élastomère utile aux besoins de l'invention est très préférentiellement un copolymère d'éthylène et de 1,3-butadiène.

Quel que soit le mode de réalisation de l'invention, y compris dans les variantes, l'élastomère utile aux besoins de l'invention est préférentiellement statistique.

Selon l'invention, la fonction silanol ou alcoxysilane est située en extrémité de la chaîne de l'élastomère. Dans la présente demande, la fonction alcoxysilane ou silanol portée en une des extrémités est désignée dans la présente demande par l'appellation le groupe fonctionnel F¹. De préférence, elle est attachée directement par une liaison covalente à l'unité terminale de l'élastomère, ce qui revient à dire que l'atome de silicium de la fonction est lié directement de façon covalente à un atome de carbone de l'unité terminale de l'élastomère. L'unité terminale à laquelle est directement attaché le groupe fonctionnel F¹ est de préférence constituée d'un méthylène lié à une unité éthylène ou à une unité UD, l'atome Si étant lié au méthylène. Par unité terminale, on entend la dernière unité insérée dans la chaine copolymère par copolymérisation, unité qui est précédée de l'unité pénultième, elle-même précédée de l'unité antepénultième.

Selon une première variante de l'invention, le groupe fonctionnel F¹ est de formule (III-a)

Si(OR¹)_{3-f}(R²)_{f} (III-a)

les symboles R¹, identiques ou différents, représentant un alkyle,
les symboles R², identiques ou différents, représentant un atome d'hydrogène, une chaîne hydrocarbonée ou une chaîne hydrocarbonée substituée par une fonction chimique F²,
f étant un nombre entier allant de 0 à 2.

Dans la formule (III-a), les symboles R¹ sont préférentiellement un alkyle ayant au plus 6 atomes de carbone, plus préférentiellement un méthyle ou un éthyle, encore plus préférentiellement un méthyle.
Si 3-f est supérieur à 1, les symboles R¹ sont avantageusement identiques, en particulier méthyle ou éthyle, plus particulièrement méthyle.

Selon une deuxième variante de l'invention, le groupe fonctionnel F¹ est de formule (III-b)

Si(OH)(R²)₂, (III-b)

les symboles R², identiques ou différents, représentant un atome d'hydrogène, une chaîne hydrocarbonée ou une chaîne hydrocarbonée substituée par une fonction chimique F².

Parmi les chaînes hydrocarbonées représentée par les symboles R² dans les formules (III-a) et (III-b), on peut citer les alkyles, notamment ceux ayant 1 à 6 atomes de carbone, préférentiellement méthyle ou éthyle, plus préférentiellement méthyle.

Parmi les chaînes hydrocarbonées substituées par une fonction chimique F² représentée par les symboles R² dans les formules (III-a) et (III-b), on peut citer les chaînes alcanediyles, notamment celles comportant au plus 6 atomes de carbone, tout particulièrement le groupe 1,3-propanediyle, le groupe alcanediyle portant un substituant, la fonction chimique F² , autrement dit, une valence de la chaîne alcanediyle pour la fonction F², l'autre valence pour l'atome de silicium de la fonction silanol ou alcoxysilane.

Dans les formules (III-a) et (III-b), on entend par fonction chimique F² un groupe qui est différent d'un groupe hydrocarboné saturé et qui peut participer à des réactions chimiques. Parmi les fonctions chimiques qui peuvent convenir, on peut citer la fonction éther, la fonction thioéther, la fonction amine primaire, secondaire ou tertiaire, la fonction thiol, la fonction silyle. Les fonctions amine primaire ou secondaire ou thiol peuvent être protégées ou ne pas être protégées. Le groupe protecteur des fonctions amine et thiol est par exemple un groupe silyle, en particulier triméthylsilyle ou terbutyldiméthylsilyle. De préférence, la fonction chimique F² est une fonction amine primaire, secondaire, tertiaire ou une fonction thiol, la fonction amine primaire, secondaire ou thiol étant protégée par un groupe protecteur ou non protégée.

De préférence, les symboles R² , identiques ou différents, représentent un alkyle ayant au plus 6 atomes de carbone ou une chaîne alcanediyle ayant au plus 6 atomes de carbone et substituée par une fonction chimique F² dans les formules (III-a) et (III-b).

A titre de groupe fonctionnel F¹, on peut citer les groupes diméthoxyméthylsilyle, diméthoxyéthylsilyle, diéthoxyméthysilyle, diéthoxyéthysilyle, 3-(N,N-diméthylamino)propyl-diméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle, méthoxydiméthylsilyle, méthoxydiéthylsilyle, éthoxydiméthysilyle, éthoxydiéthysilyle, 3-(N,N-diméthylamino)propylméthoxyméthylsilyle, 3-(N,N-diméthylamino)propylméthoxy-éthylsilyle, 3-(N,N-diméthylamino)propyléthoxyméthylsilyle, 3-(N,N-diméthylamino)propyl-éthoxyéthylsilyle, 3-aminopropylméthoxyméthylsilyle, 3-aminopropylméthoxyéthylsilyle, 3-aminopropyléthoxyméthylsilyle, 3-aminopropyléthoxyéthylsilyle, 3-thiopropylméthoxy-méthylsilyle, 3-thiopropyléthoxyméthylsilyle, 3-thiopropylméthoxyéthylsilyle, 3-thiopropyl-éthoxyéthylsilyle.

A titre de groupe fonctionnel F¹ , on peut aussi citer la forme silanol des groupes fonctionnels précédemment cités qui contiennent une et une seule (*en anglais* « one ») fonction éthoxy ou méthoxy, la forme silanol pouvant être obtenue par hydrolyse de la fonction éthoxy ou méthoxy. A ce titre conviennent les groupes diméthylsilanol, diéthylsilanol, 3-(N,N-diméthylamino)propylméthylsilanol, 3-(N,N-diméthylamino)propyl-éthylsilanol, 3-aminopropylméthylsilanol, 3-aminopropyléthylsilanol, 3-thiopropyléthylsilanol, 3-thiopropylméthylsilanol.

A titre de groupe fonctionnel F¹ , on peut également citer les groupes fonctionnels qu'ils soient sous la forme alcoxy ou silanol, qui ont été précédemment cités et qui comportent une fonction amine ou thiol sous une forme protégée par un groupe silyle, en particulier triméthylsilyle ou terbutyldiméthylsilyle.

Selon un mode de réalisation très préférentiel de l'invention, le groupe fonctionnel F¹ est de formule (III-a) dans laquelle f est égal à 1. Selon ce mode de réalisation très préférentiel, conviennent tout particulièrement les groupes pour lesquels R¹ est un méthyle ou un éthyle, comme par exemple les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle. Conviennent aussi les formes protégées de la fonction amine ou thiol des 4 derniers groupes fonctionnels cités dans la liste précédente par un groupe silyle, en particulier triméthylsilyle ou terbutyldiméthylsilyle.

Selon un mode de réalisation encore plus préférentiel de l'invention, le groupe fonctionnel F¹ est de formule (III-a) dans laquelle f vaut 1 et R¹ est un méthyle. Selon ce mode de réalisation encore plus préférentiel, conviennent tout particulièrement les groupes diméthoxyméthylsilyle, diméthoxyéthylsilyle, 3-(N,N-diméthylamino)propyldiméthoxysilyle, 3-aminopropyldiméthoxysilyle, 3-thiopropyldiméthoxysilyle, ainsi que les formes protégées de la fonction amine ou thiol du 3-aminopropyldiméthoxysilyle ou 3-thiopropyldiméthoxysilyle par un triméthylsilyle ou un terbutyldiméthylsilyle.

L'élastomère utile aux besoins de l'invention peut être préparé par un procédé qui comprend les étapes (a) et (b), et le cas échéant l'étape (c) suivantes :
a) la copolymérisation d'un mélange monomère en présence d'un système catalytique comprenant un organomagnésien et un métallocène,
b) la réaction d'un agent de fonctionnalisation avec le polymère obtenu à l'étape a),
c) le cas échéant une réaction d'hydrolyse.

L'étape a) est une copolymérisation du mélange des monomères. Le mélange monomère est un mélange d'éthylène, du 1,3diène, de préférence du 1,3-butadiène, et éventuellement de l'a-monooléfine. La copolymérisation peut être conduite conformément aux demandes de brevet EP 1 092 731, WO 2004035639, WO 2007054223 et WO 2007054224 en utilisant un système catalytique composé d'un métallocène et d'un organomagnésien utilisés à titre de catalyseur et de co-catalyseur respectivement.

L'homme du métier adapte les conditions de polymérisation décrites dans ces documents de manière à atteindre la microstructure et la macrostructure souhaitées de la chaîne copolymère. Selon l'un quelconque des modes de réalisation de l'invention, le rapport molaire de l'organomagnésien sur le métal Met constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

Avantageusement, l'organomagnésien est le butyloctylmagnésium ou le butyléthylmagnésium et le métallocène est choisi parmi [{Me₂SiFlu₂Nd(µ-BH₄)₂Li(THF)}₂], [Me₂SiFlu₂Nd(µ-BH₄)₂Li(THF)], [Me₂SiFlu₂Nd(µ-BH₄)(THF)], [{Me₂SiFlu₂Nd(µ-BH₄)(THF)}₂], [Me₂SiFlu₂Nd(µ-BH₄)], [Me₂Si(C₅H₄)(C₁₃H₈)NdCl], [Me₂Si(C₅H₄)(C₁₃H₈)Nd(BH₄)₂Li(THF)], [Me₂Si(C₅H₄)(C₁₃H₈)Nd(BH₄)(THF)], le symbole Flu représentant le groupe C₁₃H₈.

L'étape b) consiste à faire réagir un agent de fonctionnalisation avec le copolymère obtenu à l'étape a) pour fonctionnaliser en extrémité de chaîne le copolymère. L'agent de fonctionnalisation est un composé de formule (IV),

Si(Fc¹)_{4-g}(Rc²)_{g} (IV)

les symboles Fc¹, identiques ou différents, représentant un groupe alcoxy ou un atome d'halogène,
les symboles Rc², identiques ou différents, représentant un atome d'hydrogène, une chaîne hydrocarbonée ou une chaîne hydrocarbonée substituée par une fonction chimique Fc²,
g étant un nombre entier allant de 0 à 2.

Lorsque le symbole Fc¹ représente un groupe alcoxy, le groupe alcoxy est de préférence méthoxy ou éthoxy. Lorsque le symbole Fc¹ représente un atome d'halogène, l'atome d'halogène est de préférence le chlore.

Selon un mode de réalisation préférentiel de l'invention, au moins un des symboles Fc¹ représente un groupe alcoxy, en particulier méthoxy ou éthoxy. Avantageusement, l'agent de fonctionnalisation est alors de formule (IV-1)

MeOSi(Fc¹)_{3-g}(Rc²)_{g} (IV-1)

les symboles Fc¹, Rc² et g étant tels que définis dans la formule (IV).

Selon un mode de réalisation plus préférentiel, au moins deux des symboles Fc¹ représentent un groupe alcoxy, en particulier méthoxy ou éthoxy. Avantageusement, l'agent de fonctionnalisation est alors de formule (IV-2)

(MeO)₂Si(Fc¹)_{2-g}(Rc²)_{g} (IV-2)

les symboles Fc¹, Rc² et g étant tels que définis dans la formule (IV).

Selon un mode de réalisation encore plus préférentiel, au moins trois des symboles Fc¹ représentent un groupe alcoxy, en particulier méthoxy ou éthoxy. Avantageusement, l'agent de fonctionnalisation est alors de formule (IV-3)

(MeO)₃Si(Fc¹)_{1-g}(Rc²)_{g} (IV-3)

les symboles Fc¹, Rc² étant tels que définis dans la formule (IV) et g nombre entier allant de 0 à 1.

Selon un mode de réalisation encore plus avantageux, l'agent de fonctionnalisation est de formule (IV-4)

(MeO)₃SiRc² (IV-4)

Rc² étant tel que défini dans la formule (IV).

Parmi les chaînes hydrocarbonées représentée par les symboles Rc² dans les formules (III), (IV-1), (IV-2), (IV-3) et (IV-4), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc² qui sont représentée par les symboles Rc² dans les formules (IV), (IV-1), (IV-2), (IV-3) et (IV-4), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique Fc², autrement dit une valence de la chaîne alcanediyle pour la fonction F², l'autre valence pour l'atome de silicium de la fonction silanol ou alcoxysilane.

Dans les formules (IV), (IV-1), (IV-2), (IV-3) et (IV-4), on entend par fonction chimique un groupe qui est différent d'un groupe hydrocarboné saturé et qui peut participer à des réactions chimiques. L'homme du métier comprend que la fonction chimique Fc² est un groupe chimiquement inerte vis-à-vis des espèces chimiques présentes dans le milieu de polymérisation. La fonction chimique Fc² peut être sous une forme protégée, comme par exemple dans le cas de la fonction amine primaire, amine secondaire ou thiol. A titre de fonction chimique Fc², peuvent être citées les fonctions éther, thioéther, amine primaire protégée, amine secondaire protégée, amine tertiaire, thiol protégé, silyle. De préférence, la fonction chimique Fc² est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

g est de préférence différent de 0, ce qui implique que l'agent de fonctionnalisation comprend au moins une liaison Si-Rc².

A titre d'agent de fonctionnalisation, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxyméthylsilane, triéthoxyméthylsilane, triméthoxyéthylsilane, triéthoxyéthylsilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthylsilyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

L'agent de fonctionnalisation est ajouté typiquement au milieu de polymérisation résultant de l'étape a). Il est typiquement ajouté au milieu de polymérisation à un taux de conversion des monomères choisi par l'homme du métier selon la macrostructure souhaitée de l'élastomère. L'étape a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Une fois fonctionnalisé, l'élastomère peut être récupéré, notamment en l'isolant du milieu réactionnel. Les techniques pour séparer l'élastomère du milieu réactionnel sont bien connues de l'homme du métier et choisies par l'homme du métier selon la quantité d'élastomère à séparer, sa macrostructure et les outils mis à dispositions de l'homme du métier. Peuvent être cités par exemple les techniques de coagulation de l'élastomère dans un solvant tel que le méthanol, les techniques d'évaporation du solvant du milieu réactionnel et des monomères résiduels, par exemple sous pression réduite.

Lorsque l'agent de fonctionnalisation est de formule (IV), (IV-1) ou (IV-2) et g est égal à 2, l'étape b) peut être suivie d'une réaction d'hydrolyse pour former un élastomère portant en extrémité de chaîne une fonction silanol. L'hydrolyse peut être conduite par une étape de stripping de la solution contenant l'élastomère à l'issue de l'étape b), de manière connue par l'homme du métier.

Lorsque l'agent de fonctionnalisation est de formule (IV), (IV-1), (IV-2), (IV-3) ou (IV-4), que g est différent de 0 et que Rc² représente une chaîne hydrocarbonée substituée par une fonction Fc² sous une forme protégée, l'étape b) peut être aussi suivie d'une réaction d'hydrolyse pour déprotéger la fonction en extrémité de la chaîne de l'élastomère. La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine ou thiol peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape c) est une étape optionnelle selon que l'on souhaite transformer ou non le groupe fonctionnel en fonction silanol ou que l'on souhaite déprotéger ou non la fonction protégée. Préférentiellement, l'étape c) est conduite avant de séparer l'élastomère du milieu réactionnel à l'issue de l'étape b) ou bien simultanément à cette étape de séparation.

De préférence, la composition de caoutchouc contient plus de 50 pce de l'élastomère fortement saturé, de manière plus préférentielle au moins 80 pce de l'élastomère utile aux besoins de l'invention. Avantageusement, le taux de l'élastomère fortement saturé est de 100 pce. L'élastomère fortement saturé peut être constitué d'un mélange d'élastomères utiles aux besoins de l'invention qui se différencient des uns des autres par leurs microstructures ou par leurs macrostructures.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De manière préférentielle, le taux de charge inorganique renforçante est compris entre 30 et 200 pce, plus préférentiellement entre 40 et 160 pce. L'une quelconque de ces plages de taux de charge inorganique renforçante peut s'appliquer à l'un quelconque des modes de réalisation de l'invention.

La composition de caoutchouc peut comprendre en outre du noir de carbone. Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique). Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante, notamment la silice.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z-G-Sₓ-G-Z (V)

dans laquelle :
- x est un entier de 2 à 8 (de préférence de 2 à 5) ;
- les symboles G, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 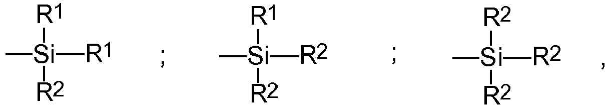 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupes fonctionnels azodicarbonyle, tels que décrits par exemple dans les demandes de brevets WO 2006/125532, WO 2006/125533, WO 2006/125534.

La teneur en agent de couplage est avantageusement inférieure à 30 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 16 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

La composition de caoutchouc peut contenir un système de réticulation. La réticulation chimique permet la formation de liaisons covalentes entre les chaînes d'élastomère. Le système de réticulation peut être un système de vulcanisation ou un ou plusieurs composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de préférence de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc peut contenir en plus de l'élastomère fortement saturé un deuxième élastomère. Le deuxième élastomère peut être choisi dans le groupe des élastomères diéniques constitué par les polybutadiènes, les polyisoprènes, les copolymères de butadiène, les copolymères d'isoprène et leur mélange.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants, .

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception du système de réticulation, à savoir la charge inorganique renforçante, l'agent de couplage le cas échéant, sont incorporés de manière intime, par malaxage, à l'élastomère diénique, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est un produit semi-fini qui peut être utilisé dans un pneumatique, notamment comme bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Méthodes de caractérisation :

### Chromatographie d'exclusion stérique (SEC) :

### a) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polymolécularité (Ip = Mw/Mn) peuvent également être calculées.

### b) Préparation du polymère:

Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine) à une concentration d'environ 1 g/L. Puis la solution est filtrée sur filtre de porosité 0.45µm avant injection.

### c) Analyse SEC3D:

L'appareillage utilisé est un chromatographe « WATERS Alliance ». Le solvant d'élution est du (tétrahydrofuranne + 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».

Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».

### Résonance magnétique nucléaire (RMN) :

Tous les produits de fonctionnalisation des copolymères de l'éthylène et du 1,3-butadiène sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBIz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. La détermination de la microstructure des copolymères est définie dans la littérature, selon l'article de Llauro et al., Macromolecules 2001, 34, 6304-6311. Cette méthode a été complétée dans le cas spécifique de terpolymères possédant des motifs styrène, comme décrit ci-après.

Le spectre RMN 1H permet de quantifier les unités styrène, 1,3-butadiène et éthylène.

Le spectre de corrélation RMN 2D 1H/13C 1J HSQC édité permet de vérifier la nature des motifs grâce aux déplacements chimiques des signaux des atomes de carbone et de proton. Des spectres de corrélation longue distance 3J HMBC 1H/13C permettent de vérifier la présence de liaisons covalentes entre les unités styrène, 1,3-butadiène et l'éthylène.

L'attribution des protons utilisés pour la quantification est reportée dans le tableau 1.

**Tableau 1 : Déplacements chimiques observés pour la quantification des échantillons Les déplacements chimiques sont calibrés par rapport à l'impureté protonée du chloroforme (δppm 1H à 7,20ppm et δppm 13C à 77,0ppm).**

| **Nombre de proton** | **δppm (¹H)** | **Unités quantifiés** |
|---|---|---|
| 5 | 6.5 à 8 | 5 H aromatiques de l'unité styrène |
| 1+2 | 4.96 à 5.60 | 1H éthylénique du PB1-2 + 2H éthyléniques du PB1-4 |
| 2 | 4.6 à 4.96 | 2H éthyléniques du PB1-2 |
| 4 | 0.2 - 3.0 | 4H de l'unité éthylène + 3H aliphatiques de l'unité styrène + 3H du PB1-2 + 4H du PB1-4 |

| | | |
|---|---|---|
| PB1-2 : unité du 1,3 butadiène résultant d'une insertion 2,1 (unité 1,2) PB1-4 : unité du 1,3 butadiène résultant d'une insertion 1,4 (unité 1,4) L'information de la microstructure en cis et trans des motifs PB1-4 peut être obtenue à partir du spectre RMN ¹D ¹³C quantitatif | | |

Les expériences bidimensionnelles ¹H/¹³C et ¹H/⁹Si sont utilisées dans le but de déterminer la structure des polymères fonctionnels.

La structure chimique finale de chaque polymère fonctionnel est identifiée par RMN (¹H, ¹³C et ²⁹Si).

### Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% (cycle aller), puis de 50% à 0,1% (cycle retour). Les résultats exploités sont le module complexe de cisaillement G*, le facteur de perte tan(δ) et l'écart de module ΔG* entre les valeurs à 0,1 et 50% de déformation (effet Payne). Pour le cycle retour, on indique la valeur maximale de tan(δ) observée, noté tan(δ)max. Le module complexe G* à 50% de déformation, noté G*, l'écart de module ΔG* entre les valeurs 0,1 et 50% de déformation (effet Payne) et la valeur de tan(δ)max sont donnés en base 100, la valeur 100 étant attribuée à la composition témoin (T). Plus la valeur de ΔG* est faible, plus la non linéarité est faible. Plus la valeur de tan(δ)max est faible, plus l'hystérèse de la composition de caoutchouc est faible. Plus la valeur de G* est faible, plus la rigidité de la composition est faible.

On enregistre également la réponse d'un échantillon de composition soumis à une sollicitation sinusoïdale en cisaillement simple alterné lors d'un balayage en température, soumis à une sollicitation sinusoïdale à contrainte imposée de 0,7 MPa et à une fréquence de 10 Hz, la température allant de -60°C à 100°C, à raison une vitesse de 1,5°C par minute. La Tg du mélange est indiquée par la température du maximum de tan(δ), notée « Tg (°C) tan(δ) max ». Un autre résultat exploité est le module complexe de cisaillement dynamique (G*), noté Module G*, par exemple à 60°C. Pour plus de lisibilité les résultats de G* seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### II.2-Préparation des copolymères conformes à l'invention :

### Matières premières

Tous les réactifs sont obtenus commercialement excepté les métallocènes [{Me₂SiFlu₂Nd(n-BH₄)₂Li(THF)}₂] (métallocène A) et [{Me₂SiCpFluNd(µ-BH₄)₂Li(THF)}₂] (métallocène B) (Cp et Flu désignant respectivement C₅H₄ et C₈H₁₃) qui peuvent être préparés selon les mode opératoires décrits dans les documents WO 2007054224 et WO 2007054223.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le 1,3-butadiène est purifié sur gardes d'alumine. Les agents de fonctionnalisation sont utilisés sans purification préalable. Le (N,N-dimethyl-3-aminopropyl)methyldimethoxysilane (AB252529), provient de chez ABCR et le (N,N-diméthylaminopropyl)trimethoxysilane provient de chez Nitrochemie

Le solvant méthylcyclohexane provenant de chez BioSolve est séché et purifié sur colonne d'alumine dans une fontaine à solvant provenant de chez mBraun et utilisés en atmosphère inerte. Le méthanol (99%, classe 3, grade II) provient de la société Laurylas, le C₆D₆ (99,6% atom D) de chez Aldrich et est stocké à froid. Toutes les réactions sont effectuées en atmosphère inerte.

### Equipement

Toutes les polymérisations et les réactions de fonctionnalisation de copolymères de l'éthylène et du 1,3-butadiène ou des terpolymères de l'éthylène, du 1,3-butadiène et du styrène sont effectuées dans un réacteur à cuve jetable en verre de 500 mL (flacons Schott) muni d'une pale d'agitation en acier inoxydable. Le contrôle de la température est assuré grâce à un bain d'huile thermostaté connecté à une double enveloppe en polycarbonate. Ce réacteur possède toutes les entrées ou sorties nécessaires aux manipulations.

### Mode opératoire de polymérisation

30 mg de métallocène sont introduits dans une première bouteille Steinie en boite à gant. Le butyloctylmagnésium mis au préalable en solution dans 300 ml de méthylcyclohexane dans une seconde bouteille Steinie est introduit dans la première bouteille Steinie contenant le métallocène dans les proportions indiquées dans le tableau 2. Après 10 minutes de contact à température ambiante est obtenue une solution catalytique. La solution catalytique est ensuite introduite dans le réacteur de polymérisation.

Dans le cas du métallocène A, [{Me₂SiFlu₂Nd(µ-BH₄)₂Li(THF)}₂], La température dans le réacteur est alors augmentée à 80°C. Lorsque cette température est atteinte, la réaction démarre par injection d'un mélange gazeux d'éthylène (Eth) et de 1,3-butadiène (But) (80/20 % molaire) dans le réacteur. La réaction de polymérisation se déroule à une pression de 4 bars sauf dans le cas de l'exemple 6 où elle se déroule à 8 bars.

Dans le cas du métallocène B, [{Me₂SiCpFluNd(µ-BH₄)₂Li(THF)}₂], La température dans le réacteur est alors augmentée à 50°C. Lorsque cette température est atteinte, la réaction démarre par injection d'un mélange gazeux d'éthylène (Eth) et de 1,3-butadiène (But) dans le réacteur dans les proportions définies dans le tableau 2. La réaction de polymérisation se déroule à une pression de 4 bars.

Lors de la synthèse de terpolymère de l'éthylène, du 1,3-butadiène et du styrène avec ce métallocène, le styrène est injecté dans le réacteur de polymérisation juste après introduction de la solution catalytique.

### Mode opératoire de fonctionnalisation

Lorsque la conversion en monomères souhaitée est atteinte, le contenu du réacteur est dégazé puis l'agent de fonctionnalisation est introduit sous atmosphère inerte par surpression. Le milieu réactionnel est agité pendant un temps et une température indiqués dans le tableau 2. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé puis séché à 60°C sous vide jusqu'à masse constante. Il est ensuite analysé par SEC (THF), RMN ¹H, ¹³C, ²⁹Si.

Les agents de fonctionnalisation utilisés sont respectivement :

| | |
|---|---|
| - (N,N-diméthyl-3-aminopropyl)méthyldiméthoxysilane | A1 |
| - (N,N-diméthyl-3-aminopropyl)triméthoxysilane | A2 |

Les conditions expérimentales de la réaction de fonctionnalisation sont décrites dans le tableau 2.

### Mode opératoire de la préparation des compositions de caoutchouc

Des compositions de caoutchouc dont la formulation exprimée en pce (parties en poids pour cent partie d'élastomère) figure dans le tableau 3, ont été préparées selon le mode opératoire suivant : on introduit dans un mélangeur interne (taux de remplissage final : environ 70% en volume), dont la température initiale de cuve est d'environ 80°C, successivement le copolymère, la silice, ainsi que les divers autres ingrédients a l'exception du système de vulcanisation. On conduit alors un travail thermomécanique (phase non-productive) en une étape, qui dure au total environ 5 min, jusqu'à atteindre une température maximale de « tombée » de 150°C. On récupère le mélange ainsi obtenu, on le refroidit puis on incorpore du soufre et l'accélérateur sur un mélangeur (homo-finisseur) à 40 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

### II.3-Résultats :

Les résultats figurent dans les tableaux 4 et 5.

Indépendamment de l'agent de fonctionnalisation et du métallocène utilisés, le copolymère présente en extrémité de chaîne une fonctionnalisation alcoxysilane ou silanol. Le tiers, voire la moitié des chaînes peuvent être fonctionnalisées, comme c'est le cas lorsque les agents de fonctionnalisation A1 et A2sont utilisés avec le métallocène A. Dans le cas de l'utilisation du métallocène B avec les agents de fonctionnalisation A1 et A2, les taux de fonctions peuvent atteindre plus de 90%

Les valeurs de ΔG* et Tanδ max de la composition I qui comprend un copolymère conforme à l'invention sont bien plus faibles que celles de la composition témoin T. En parallèle, la valeur de G* est aussi plus faible. La composition de caoutchouc conforme à l'invention est à la fois moins hystérétique et moins rigide que la composition témoin.

**Tableau 2**

| Exemple | Métallocène | Métallocène (mol/L) | Co-catalyseur (mol/L) | Eth/But (%mol) | Styrène (mL) | Agent fonctionnalisation | Rapport Agent fonctionnalisation / co-catalyseur | Durée fonctionnalisation (min) | Température de polymérisation et de fonctionnalisation (°C) |
|---|---|---|---|---|---|---|---|---|---|
| 1 | A | 0.00015 | 0.00075 | 80/20 | - | A1 | 2 | 15 | 80 |
| 2 | A | 0.00016 | 0.00081 | 80/20 | - | A2 | 4 | 60 | 80 |
| 3 | B | 0.00026 | 0.00094 | 80/20 | - | A1 | 4 | 60 | 50 |
| 4 | B | 0.00019 | 0.0011 | 80/20 | - | A2 | 4 | 60 | 50 |
| 5 | B | 0.00019 | 0.0011 | 90/10 | 20 | A1 | 4 | 60 | 40 |
| 6 | A | 0.00007 | 0.0004 | 80/20 | - | A1 | 4 | 15 | 80 |

**Tableau 3**

| Composition (pce) | T | I |
|---|---|---|
| EBR (1) | 100 | - |
| EBR (2) | - | 100 |
| Antioxydant (3) | 2 | 2 |
| Acide stéarique | 2 | 2 |
| ZnO | 1 | 1 |
| Accélérateur (4) | 2 | 2 |
| Soufre | 1 | 1 |
| N234 | 3 | 3 |
| Silice (5) | 55 | 55 |
| Cire anti-ozone | 1.6 | 1.6 |
| Silane (6) | 4 | 4 |
| DPG (7) | 1.5 | 1.5 |

| | | |
|---|---|---|
| (1) Copolymère d'éthylène et de 1,3-butadiène à 79% en mole d'unité éthylène et 7% en mole d'unité 1,2-cyclohexanediyle (non fonctionnel) (2) Copolymère d'éthylène et de 1,3-butadiène à 77% en mole d'unité éthylène et 9% en mole d'unité 1,2-cyclohexanediyle fonctionnalisé en extrémité de chaîne, taux de fonction 35%, agent de fonctionnalisation N,N-diméthyl-3-aminopropyl)méthyldiméthoxysilane (3) N-(1,3-diméthylbutyl)-N'-phényl-p-phenylènediamine ("Santoflex 6-PPD" société Flexsys) (4) N-cyclohexyl-2-benzothiazol-sulfénamide (« Santocure CBS » de la société Flexsys) (5) "Zeosil 1165 MP" société Solvay-Rhodia sous forme de microperles (6) TESPT ("Si69") société Evonik-Degussa (7) Diphénylguanidine | | |

**Tableau 4**

| Exemple | Mn (g/mol) | Ethylène (% mol) | Butadiène 1,2 (% mol) | Butadiène 1,4 (% mol) | 1,2 cyclohexanediyle (% mol) | Styrène (% mol) | Taux de fonction (%) |
|---|---|---|---|---|---|---|---|
| 1 | 30100 | 76.7 | 6 | 5.4 | 11.9 | - | 33 |
| 2 | 41800 | 78 | 6 | 5 | 11 | - | 48 |
| 3 | 11265 | 56.8 | 1 | 42 | 0.2 | - | 98 |
| 4 | 16150 | 69 | 1 | 30 | 0 | - | 91 |
| 5 | 28160 | 62.5 | 0.5 | 10 | 0 | 27 | 44 |
| 6 | 139400 | 76.7 | 9 | 5.6 | 8.7 | - | 35 |

**Tableau 5**

| Propriétés à cuit | T | I |
|---|---|---|
| ΔG* 23°C | 100 | 51 |
| Tanδ max 23°C | 100 | 82 |
| G* 23°C | 100 | 79 |
| Module G* | 100 | 88 |

## Revendications

1. Composition de caoutchouc qui comprend au moins une charge inorganique renforçante et un élastomère fortement saturé comprenant des unités 1,3-diène et des unités éthylène et portant en extrémité de chaîne un groupe fonctionnel F¹ qui est une fonction silanol ou alcoxysilane, les unités éthylène représentant plus de 50% en mole de l'ensemble des unités monomères de l'élastomère.

2. Composition selon la revendication 1 dans laquelle les unités éthylène représentent plus de 60% en mole de l'ensemble des unités monomères de l'élastomère, de préférence représentent au moins 65% en mole de l'ensemble des unités monomères de l'élastomère.

3. Composition selon l'une quelconque des revendications 1 à 2 dans laquelle le 1,3-diène est le 1,3-butadiène.

4. Composition selon l'une quelconque des revendications 1 à 3 dans laquelle l'élastomère contient des unités UD de formule (I).

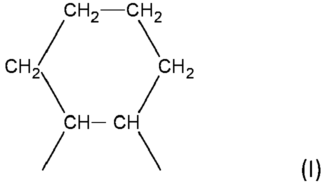

5. Composition selon l'une quelconque des revendications 1 à 4 dans laquelle l'élastomère est un copolymère de 1,3-butadiène et d'éthylène ou un terpolymère de 1,3-butadiène, d'éthylène et d'une α-monooléfine, de préférence un copolymère de 1,3-butadiène et d'éthylène.

6. Composition selon la revendication 5 dans laquelle l'a-monooléfine est le styrène, un styrène substitué par un ou plusieurs groupes alkyles en para, méta ou ortho ou leurs mélanges.

7. Composition de caoutchouc selon l'une quelconque des revendications 1 à 6 dans laquelle le groupe fonctionnel F¹ est de formule (III-a) ou (III-b)
Si(OR¹)_{3-f}(R²)_{f} (III-a)
Si(OH)(R²)₂ (III-b)
les symboles R¹, identiques ou différents, représentant un alkyle,
les symboles R², identiques ou différents, représentant un atome d'hydrogène, une chaîne hydrocarbonée ou une chaîne hydrocarbonée substituée par une fonction chimique F²,
f étant un nombre entier allant de 0 à 2.

8. Composition de caoutchouc selon la revendication 7 dans laquelle les symboles R¹ sont un alkyle ayant au plus 6 atomes de carbone et les symboles R² représentent un alkyle ayant au plus 6 atomes de carbone ou une chaîne alcanediyle ayant au plus 6 atomes de carbone et substituée par une fonction chimique F².

9. Composition selon l'une quelconque des revendications 7 à 8 dans laquelle l'alkyle représenté par les symboles R¹ et R² est un méthyle ou un éthyle, de manière préférentielle un méthyle.

10. Composition selon l'une quelconque des revendications 7 à 9 dans laquelle la fonction chimique F² est une fonction amine primaire, secondaire, tertiaire ou une fonction thiol, la fonction amine primaire, secondaire ou thiol étant protégée par un groupe protecteur ou non protégée.

11. Composition selon l'une quelconque des revendications 1 à 10 dans laquelle le groupe fonctionnel F¹ est diméthylsilanol, diéthylsilanol, 3-(N,N-diméthylamino)propylméthylsilanol, 3-(N,N-diméthylamino)propyléthylsilanol, 3-aminopropylméthylsilanol, 3-aminopropyléthylsilanol, 3-thiopropyléthylsilanol, 3-thiopropylméthylsilanol ou la forme protégée de la fonction amine ou thiol du 3-aminopropylméthylsilanol, 3-aminopropyléthylsilanol, 3-thiopropyléthylsilanol, 3-thiopropylméthylsilanol.

12. Composition selon l'une quelconque des revendications 1 à 10 dans laquelle le groupe fonctionnel F¹ est de formule (III-a) dans laquelle f est égal à 1.

13. Composition selon l'une quelconque des revendications 1 à 12 dans laquelle le taux de l'élastomère fortement saturé est supérieur à 50 pce, de préférence supérieur ou égal à 80 pce.

14. Composition de caoutchouc selon l'une quelconque des revendications 1 à 13 dans laquelle la charge inorganique renforçante est une silice.

15. Composition de caoutchouc selon l'une quelconque des revendications 1 à 14 qui comprend en outre un agent de couplage pour coupler la charge inorganique renforçante à l'élastomère et un système de réticulation.

16. Pneumatique qui comprend une composition de caoutchouc définie selon l'une quelconque des revendications 1 à 15.

## Patentansprüche

1. Kautschukzusammensetzung, die mindestens einen verstärkenden anorganischen Füllstoff und ein hochgesättigtes Elastomer, das 1,3-Dieneinheiten und Ethyleneinheiten umfasst und am Kettenende eine funktionelle Gruppe F¹, bei der es sich um eine Silanol- oder Alkoxysilanfunktion handelt, trägt, umfasst, wobei die Ethyleneinheiten mehr als 50 Mol-% aller Monomereinheiten des Elastomers ausmachen.

2. Zusammensetzung nach Anspruch 1, wobei die Ethyleneinheiten mehr als 60 Mol-% aller Monomereinheiten des Elastomers ausmachen und vorzugsweise mindestens 65 Mol-% aller Monomereinheiten des Elastomers ausmachen.

3. Zusammensetzung nach einem der Ansprüche 1 bis 2, wobei es sich bei dem 1,3-Dien um 1,3-Butadien handelt.

4. Kautschukzusammensetzung nach einem der Ansprüche 1 bis 3, wobei das Elastomer UD-Einheiten der Formel (I) enthält:

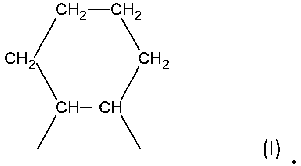

5. Zusammensetzung nach einem der Ansprüche 1 bis 4, wobei es sich bei dem Elastomer um ein Copolymer von 1,3-Butadien und Ethylen oder ein Terpolymer von 1,3-Butadien, Ethylen und einem α-Monoolefin, vorzugsweise ein Copolymer von 1,3-Butadien und Ethylen, handelt.

6. Zusammensetzung nach Anspruch 5, wobei es sich bei dem α-Monoolefin um Styrol, ein Styrol, das in para-, meta- oder ortho-Position durch eine oder mehrere Alkylgruppen substituiert ist, oder Mischungen davon handelt.

7. Kautschukzusammensetzung nach einem der Ansprüche 1 bis 6, wobei die funktionelle Gruppe F¹ die Formel (III-a) oder (III-b) aufweist:
Si(OR¹)_{3-f}(R²)_{f} (III-a)
Si(OH)(R²)₂ (III-b)
wobei
die Symbole R¹ gleich oder verschieden sind und für ein Alkyl stehen,
die Symbole R² gleich oder verschieden sind und für ein Wasserstoffatom, eine Kohlenwasserstoffkette oder eine Kohlenwasserstoffkette, die durch eine chemische Funktion F² substituiert ist, stehen,
f für eine ganze Zahl im Bereich von 0 bis 2 steht.

8. Kautschukzusammensetzung nach Anspruch 7, wobei die Symbole R¹ für ein Alkyl mit höchstens 6 Kohlenstoffatomen stehen und die Symbole R² für ein Alkyl mit höchstens 6 Kohlenstoffatomen oder eine Alkandiylkette mit höchstens 6 Kohlenstoffatomen, die durch eine chemische Funktion F² substituiert ist, stehen.

9. Zusammensetzung nach einem der Ansprüche 7 bis 8, wobei es sich bei dem durch die Symbole R¹ und R² wiedergegebenen Alkyl um ein Methyl oder ein Ethyl, vorzugsweise ein Methyl, handelt.

10. Zusammensetzung nach einem der Ansprüche 7 bis 9, wobei es sich bei der chemischen Funktion F² um eine primäre, sekundäre oder tertiäre Aminfunktion oder eine Thiolfunktion handelt, wobei die primäre oder sekundäre Amin- oder Thiolfunktion durch eine Schutzgruppe geschützt oder ungeschützt sein kann.

11. Zusammensetzung nach einem der Ansprüche 1 bis 10, wobei es sich bei der funktionellen Gruppe F¹ um Dimethylsilanol, Diethylsilanol, 3-(N,N-Dimethylamino)propylmethylsilanol, 3-(N,N-Dimethylamino)propylethylsilanol, 3-Aminopropylmethylsilanol, 3-Aminopropylethylsilanol, 3-Thiopropylethylsilanol, 3-Thiopropylmethylsilanol oder die geschützte Form der Amin- oder Thiolfunktion von 3-Aminopropylmethylsilanol, 3-Aminopropylethylsilanol, 3-Thiopropylethylsilanol oder 3-Thiopropylmethylsilanol handelt.

12. Zusammensetzung nach einem der Ansprüche 1 bis 10, wobei die funktionelle Gruppe F¹ die Formel (III-a), in der f gleich 1 ist, aufweist.

13. Zusammensetzung nach einem der Ansprüche 1 bis 12, wobei der Gehalt an hochgesättigtem Elastomer größer als 50 phe, vorzugsweise größer oder gleich 80 phe, ist.

14. Kautschukzusammensetzung nach einem der Ansprüche 1 bis 13, wobei es sich bei dem verstärkenden anorganischen Füllstoff um eine Kieselsäure handelt.

15. Kautschukzusammensetzung nach einem der Ansprüche 1 bis 14, die außerdem ein Kupplungsmittel zum Kuppeln des verstärkenden anorganischen Füllstoffs mit dem Elastomer und ein Vernetzungssystem umfasst.

16. Reifen, der eine Kautschukzusammensetzung gemäß einem der Ansprüche 1 bis 15 umfasst.

## Claims

1. Rubber composition which comprises at least one reinforcing inorganic filler and a highly saturated elastomer comprising 1,3-diene units and ethylene units and bearing, at the chain end, a functional group F¹ which is a silanol or alkoxysilane function, the ethylene units representing more than 50 mol% of all the monomer units of the elastomer.

2. Composition according to Claim 1, in which the ethylene units represent more than 60 mol% of all the monomer units of the elastomer, preferably represent at least 65 mol% of all the monomer units of the elastomer.

3. Composition according to either one of Claims 1 and 2, in which the 1,3-diene is 1,3-butadiene.

4. Composition according to any one of Claims 1 to 3, in which the elastomer contains UD units of formula (I):

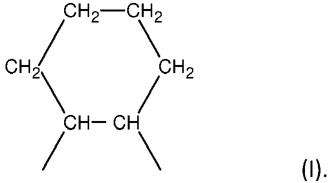

5. Composition according to any one of Claims 1 to 4, in which the elastomer is a copolymer of 1,3-butadiene and ethylene or a terpolymer of 1,3-butadiene, ethylene and an α-monoolefin, preferably a copolymer of 1,3-butadiene and ethylene.

6. Composition according to Claim 5, in which the α-monoolefin is styrene, a styrene substituted by one or more alkyl groups in the para, meta or ortho positions, or mixtures thereof.

7. Rubber composition according to any one of Claims 1 to 6, in which the functional group F¹ is of formula (III-a) or (III-b):
Si(OR¹)_{3-f}(R²)_{f} (III-a)
Si(OH)(R²)₂ (III-b)
the R¹ symbols, which are identical or different, representing an alkyl,
the R² symbols, which are identical or different, representing a hydrogen atom, a hydrocarbon chain or a hydrocarbon chain substituted by a chemical function F²,
f being an integer ranging from 0 to 2.

8. Rubber composition according to Claim 7, in which the R¹ symbols are an alkyl having at most 6 carbon atoms and the R² symbols represent an alkyl having at most 6 carbon atoms or an alkanediyl chain having at most 6 carbon atoms and substituted by a chemical function F².

9. Composition according to any one of Claims 7 to 8, in which the alkyl represented by the R¹ and R² symbols is a methyl or an ethyl, preferentially a methyl.

10. Composition according to any one of Claims 7 to 9, in which the chemical function F² is a primary, secondary or tertiary amine function or a thiol function, the primary or secondary amine or thiol function being protected by a protecting group or being unprotected.

11. Composition according to any one of Claims 1 to 10, in which the functional group F¹ is dimethylsilanol, diethylsilanol, 3-(N,N-dimethylamino)propylmethylsilanol, 3-(N,N-dimethylamino)propylethylsilanol, 3-aminopropylmethylsilanol, 3-aminopropylethylsilanol, 3-thiopropylethylsilanol, 3-thiopropylmethylsilanol or the protected form of the amine or thiol function of 3-aminopropylmethylsilanol, 3-aminopropylethylsilanol, 3-thiopropylethylsilanol, 3-thiopropylmethylsilanol.

12. Composition according to any one of Claims 1 to 10, in which the functional group F¹ is of formula (III-a) in which f is equal to 1.

13. Composition according to any one of Claims 1 to 12, in which the content of the highly saturated elastomer is greater than 50 phr, preferably greater than or equal to 80 phr.

14. Rubber composition according to any one of Claims 1 to 13, in which the reinforcing inorganic filler is a silica.

15. Rubber composition according to any one of Claims 1 to 14, which further comprises a coupling agent for coupling the reinforcing inorganic filler to the elastomer and a crosslinking system.

16. Tyre which comprises a rubber composition defined according to any one of Claims 1 to 15.
